# EUROPEAN PATENT APPLICATION

(11) **EP 4 006 125 A1**
(43) Date of publication of application: **01.06.2022**
(21) Application number: 20848548.2
(22) Date of filing: 02.07.2020
(51) Int. Cl.: C09K 21/02, C09K 21/08, C08K 5/02, C08K 5/13, C08K 5/3435, C08L 23/00, C08L 101/00, C08K 3/22

(54) **ADDITIVE COMPOSITION**

(30) Priority: 30.07.2019 JP 2019139695
(71) Applicant: ADEKA CORPORATION, Arakawa-ku Tokyo 116-8554 (JP)
(72) Inventor: YONEZAWA, Yutaka, Tokyo 116-8554 (JP); SHIMIZU, Tatsuya, Tokyo 116-8554 (JP); SAKURAI, Hisashi, Tokyo 116-8554 (JP); BANNO, Keisuke, Tokyo 116-8554 (JP)
(74) Representative: Forstmeyer, Dietmar
(86) International application number: PCT/JP2020/026061
(87) International publication number: WO 2021/020020

(57) **Abstract**

An object of the present invention is to provide an additive composition that can impart excellent thermal resistance and flame retardancy to a synthetic resin. The additive composition contains a bromine-based flame retardant as a component (A), an antimony oxide as a component (B), a compound expressed by the formula (1) below as a component (C), and a phenolic antioxidant as a component (D).

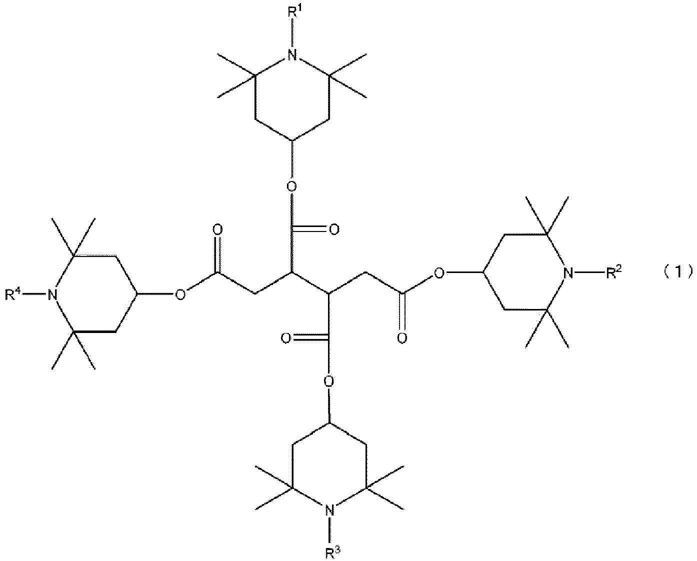

In the formula (1), R¹, R², R³, and R⁴ each independently represent a hydrogen atom or a monovalent hydrocarbon group having 1 to 4 carbon atoms. It is preferable that R¹, R², R³, and R⁴ in the formula (1) each independently represent a hydrogen atom or a linear alkyl group having 1 to 4 carbon atoms.

## Description

### Technical Field

The present invention relates to an additive composition, a flame-retardant synthetic resin composition containing the additive composition, and a formed product made of the flame-retardant synthetic resin composition.

### Background Art

Synthetic resins are widely used in various types of formed products such as films, sheets, and structural components, because they are not only excellent in terms of forming processability, heat resistance, mechanical properties, and the like, but also have advantages such as having low specific gravity and being lightweight. Furthermore, many attempts have been made in order to impart physical properties such as shock resistance and elasticity to synthetic resins by blending them with other polymers.

Meanwhile, many highly flammable synthetic resins such as polyolefin-based resins are used in a wide variety of fields. Therefore, in order to impart flame retardancy to highly flammable resins, it is necessary to add a flame retardant to those synthetic resins. Bromine-based flame retardants are known as such flame retardants (see Patent Literatures 1 to 3).

In particular, when synthetic resins are used in applications where high thermal resistance and high flame retardancy are required, such as household electric appliances and members used in batteries of automobiles, the synthetic resins need to be imparted with high thermal resistance in addition to being imparted with high flame retardancy. A synthetic resin with poor thermal resistance may cause a problem of cracking or coloring of the surface of a formed product made of that synthetic resin.

Although bromine-based flame retardants can impart excellent flame retardancy to synthetic resins, they cannot impart sufficient thermal resistance. For this reason, when using a bromine-based flame retardant, it is necessary to use an antioxidant in combination therewith in order to impart sufficient thermal resistance to a synthetic resin. However, depending on the type of antioxidant that is used in combination with the bromine-based flame retardant, the thermal resistance of the resulting synthetic resin may be insufficient. Also, a large amount of the antioxidant may need to be added in order to impart sufficient thermal resistance to the synthetic resin. To address these issues, there is demand for an additive composition that can impart high thermal resistance and flame retardancy to a synthetic resin.

### Citation List

### Patent Literature

Patent Literature 1: JP H7-53796A
Patent Literature 2: JP H8-120126A
Patent Literature 3: JP 2018-90697A

### Summary of Invention

### Problem to be Solved by the Invention

Accordingly, an object of the present invention is to provide an additive composition that can impart excellent thermal resistance and flame retardancy to a synthetic resin. Another object of the present invention is to provide a flame-retardant synthetic resin composition that has excellent thermal resistance and flame retardancy. Yet another object of the present invention is to provide a formed product that has excellent thermal resistance and flame retardancy.

### Means to Solve the Problems

In order to achieve the above-described objects, the inventors of the present invention conducted in-depth research and finally completed the present invention.

That is to say, the present invention provides an additive composition containing components (A), (B), (C), and (D) below:
the component (A): a bromine-based flame retardant;
the component (B): an antimony oxide;
the component (C): a compound expressed by the formula (1) below; and
the component (D): a phenolic antioxidant, 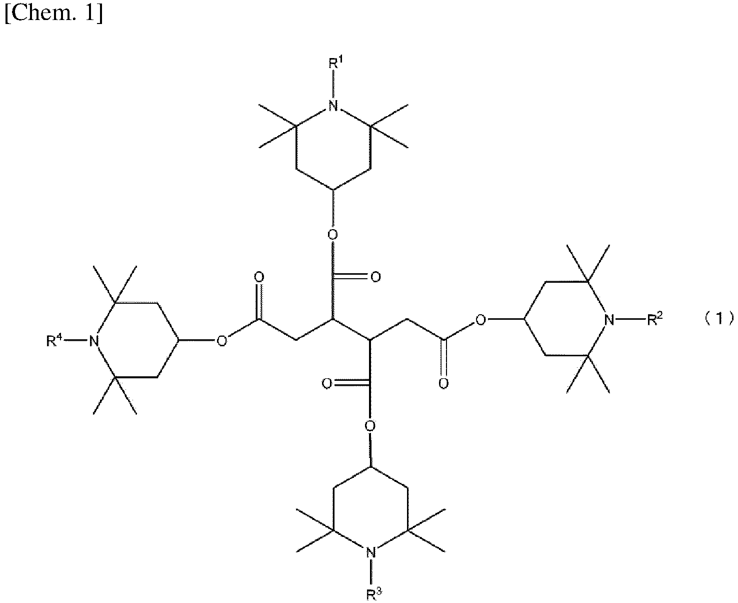
where R¹, R², R³, and R⁴ each independently represent a hydrogen atom or a monovalent hydrocarbon group having 1 to 4 carbon atoms.

Also, the present invention provides the additive composition, wherein the component (A) is a bis(pentabromophenyl)alkane.

Also, the present invention provides the additive composition, wherein R¹, R², R³, and R⁴ in the formula (1) each independently represent a hydrogen atom or a linear alkyl group having 1 to 4 carbon atoms.

Also, the present invention provides the additive composition, wherein a content ratio by mass of the component (A) to the component (C) is (A):(C) = 99.95:0.05 to 85:15.

Also, the present invention provides the additive composition, wherein the component (D) is a compound expressed by the formula (2) below or a compound expressed by the formula (3) below: 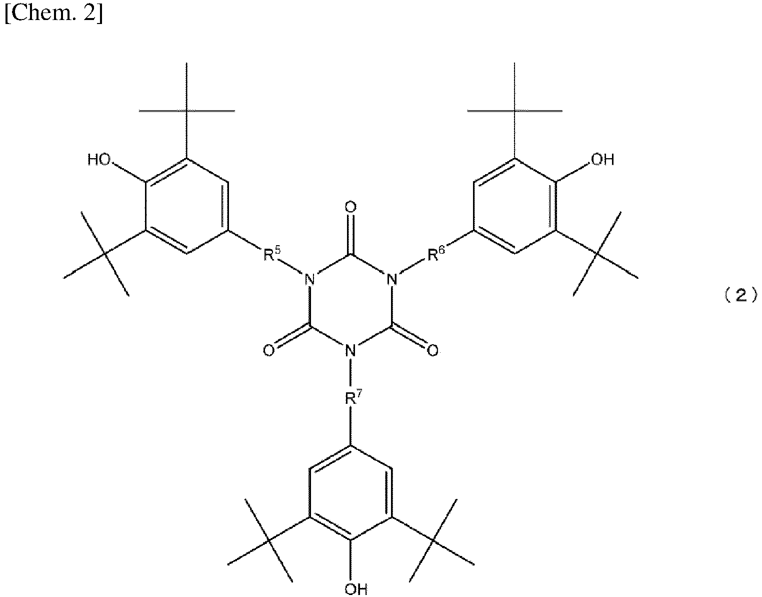 where R⁵, R⁶, and R⁷ each independently represent a divalent hydrocarbon group having 1 to 3 carbon atoms, and 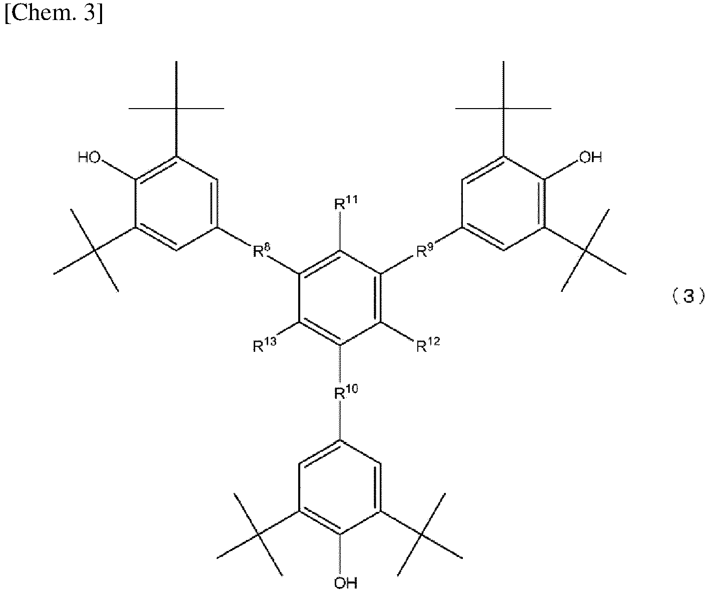
where R⁸, R⁹, and R¹⁰ each independently represent a divalent hydrocarbon group having 1 to 3 carbon atoms, and
R¹¹, R¹², and R¹³ each independently represent a hydrogen atom or a monovalent hydrocarbon group having 1 to 4 carbon atoms.

Also, the present invention provides the additive composition containing a compound expressed by the formula (2), wherein R⁵, R⁶, and R⁷ in the formula (2) each independently represent a linear alkylene group having 1 to 3 carbon atoms.

Also, the present invention provides the additive composition containing a compound expressed by the formula (3), wherein R⁸, R⁹, and R¹⁰ in the formula (3) each independently represent a linear alkylene group having 1 to 3 carbon atoms, and R¹¹, R¹², and R¹³ each independently represent a linear alkyl group having 1 to 4 carbon atoms

Also, the present invention provides the additive composition, wherein a content ratio by mass of the component (A) to the component (D) is (A):(D) = 99.95:0.05 to 85:15.

Also, the present invention provides the additive composition, wherein a content ratio by mass of the component (A) to the component (B) is (A):(B) = 99:1 to 50:50.

Also, the present invention provides a flame-retardant synthetic resin composition containing a synthetic resin and the additive composition.

Also, the present invention provides the flame-retardant synthetic resin composition, wherein the synthetic resin is a polyolefin-based resin.

Also, the present invention provides a formed product made of the flame-retardant synthetic resin composition.

Also, the present invention provides a method for causing a synthetic resin to be flame-retardant, the method including adding an additive composition containing components (A), (B), (C), and (D) below to a synthetic resin:
the component (A): a bromine-based flame retardant;
the component (B): an antimony oxide;
the component (C): a compound expressed by the formula (1) below; and
the component (D): a phenolic antioxidant, 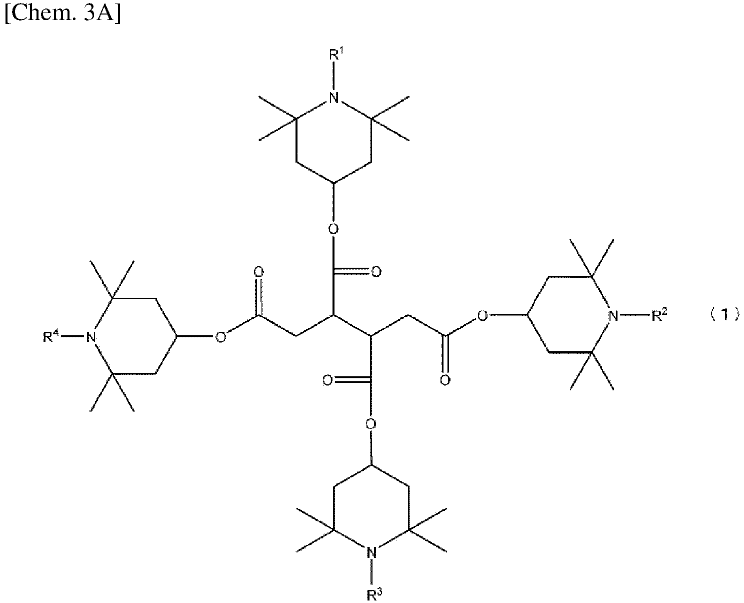
where R¹, R², R³, and R⁴ each independently represent a hydrogen atom or a monovalent hydrocarbon group having 1 to 4 carbon atoms.

### Advantageous Effects of the Invention

According to the present invention, it is possible to provide an additive composition that can impart excellent thermal resistance and flame retardancy to a synthetic resin. Also, according to the present invention, it is possible to provide a flame-retardant synthetic resin composition that has excellent thermal resistance and flame retardancy. Also, according to the present invention, it is possible to provide a formed product that has excellent thermal resistance and flame retardancy.

### Description of Embodiments

Hereinafter, the present invention will be described in detail.

First, an additive composition of the present invention will be described. The additive composition of the present invention is used added to a synthetic resin. The additive composition of the present invention contains a bromine-based flame retardant as a component (A), an antimony oxide as a component (B), a compound expressed by the formula (1) below as a component (C), and a phenolic antioxidant as a component (D).

First, the component (A) contained in the additive composition of the present invention will be described. The component (A) is a bromine-based flame retardant.

In the additive composition of the present invention, a known bromine-based flame retardant can be used without limitation. It is preferable to use a bis(pentabromophenyl)alkane as the bromine-based flame retardant. A bis(pentabromophenyl)alkane in which the alkane moiety has 1 to 3 carbon atoms is preferable. The reason for this is that the bis(pentabromophenyl)alkane exhibits excellent flame retardancy. Specific examples of the bis(pentabromophenyl)alkane in which the alkane moiety has 1 to 3 carbon atoms include 1,1-bis(pentabromophenyl)methane, 1,2-bis(pentabromophenyl)ethane, and 1,3-bis(pentabromophenyl)propane. From the viewpoint of improving the thermal resistance and the flame retardancy, it is preferable to use 1,2-bis(pentabromophenyl)ethane.

Examples of bromine-based flame retardants other than bis(pentabromophenyl)alkane s include 2,2-bis[3,5-dibromo-4-(2,3-dibromopropoxy)phenyl]propane, bis[3,5-dibromo-4-(2,3-dibromopropoxy)phenyl]sulfone, tris[3-bromo-2,2-bis(bromomethyl)propyl]phosphate, pentabromobenzyl acrylate polymer, 1,2,5,6,9,10-hexabromocyclododecane, 2,4,6-tris-(2,4,6-tribromophenoxy)-1,3,5-triazine, 2,2-bis(bromomethyl)-1,3-propanediol, tribromo-neopentyl alcohol, 2,2-bis(4-allyloxy-3,5-dibromophenyl)propane, BC-52 tetrabromobisphenol A, BC-58 tetrabromobisphenol A, tetrabromobisphenol A, tris(2,3-dibromopropyl)isocyanurate, 1,1' -[ethylenebis(oxy)]bis(2,4,6-tribromobenzene), pentabromobenzyl acrylate, tribromophenol acrylate, octabromodiphenyl ether, 2,2'-[isopropylidenebis[(2,6-dibromo-4,1-phenylene)oxy]]diethanol, N-methylhexabromo diphenylamine, and TBA bisbromoethyl ether.

In the additive composition of the present invention, one type of bromine-based flame retardant may be used alone, or two or more types may be used in combination.

From the viewpoint of further improving the thermal resistance and the flame retardancy, the amount of the bromine-based flame retardant that is contained in the additive composition of the present invention is preferably 40 to 90 mass%, more preferably 50 to 85 mass%, and even more preferably 60 to 85 mass%. The amount of the bromine-based flame retardant that is contained in the additive composition can be measured using ICP-AES (inductively coupled plasma atomic emission spectroscopy), for example.

Next, the component (B) contained in the additive composition of the present invention will be described. The component (B) is an antimony oxide. As the antimony oxide, commonly available antimony oxides such as antimony trioxide (Sb₂O₃) and antimony pentoxide (Sb₂O₅) can be used without limitation. Antimony oxides are usually used as flame-retardant aids. One type of antimony oxide may be used alone, or two or more types may be used in combination.

With regard to the amount of the component (B) that is contained in the additive composition of the present invention, from the viewpoint of improving the thermal resistance and the flame retardancy, the content ratio (A):(B) by mass of the component (A) to the component (B) is preferably (A):(B) = 99:1 to 50:50, more preferably (A):(B) = 95:5 to 60:40, and even more preferably (A):(B) = 90:10 to 70:30. The amount of the antimony oxide that is contained in the additive composition can be measured using ICP-AES (inductively coupled plasma atomic emission spectroscopy), for example.

Next, the component (C) contained in the additive composition of the present invention will be described. The component (C) is a compound expressed by the formula (1) below. The compound expressed by the formula (1) below functions as a component that imparts thermal resistance to the synthetic resin.

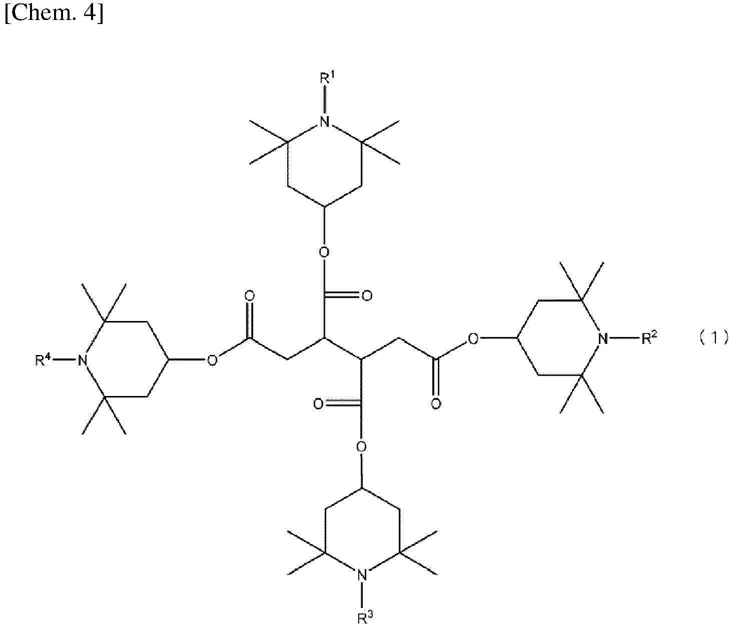

In the above formula, R¹, R², R³, and R⁴ each independently represent a hydrogen atom or a monovalent hydrocarbon group having 1 to 4 carbon atoms. Examples of this hydrocarbon group having 1 to 4 carbon atoms include alkyl groups having 1 to 4 carbon atoms, alkenyl groups having 2 to 4 carbon atoms, and alkynyl groups having 2 to 4 carbon atoms.

The alkyl groups having 1 to 4 carbon atoms may be linear or branched. Preferably, the alkyl groups are linear because such alkyl groups can impart even better thermal resistance to the synthetic resin. Examples of the linear alkyl groups include CH₃-, CH₃CH₂-, CH₃CH₂CH₂-, and CH₃CH₂CH₂CH₂-. Examples of the branched alkyl groups include CH₃(CH₃)CH-, CH₃(CH₃)CH₂CH₂-, CH₃CH₂(CH₃)CH-, and (CH₃)₃C-.

The alkenyl groups having 2 to 4 carbon atoms may be linear or branched. Moreover, the alkenyl groups may be terminal alkenyl groups having an unsaturated bond at the end, or may be internal alkenyl groups internally having an unsaturated bond. Examples of the linear alkenyl groups include terminal alkenyl groups such as CH₂=CH-, CH₂=CHCH₂-, and CH₂=CHCH₂CH₂-, and internal alkenyl groups such as CH₃CH=CH-, CH₃CH=CHCH₂-, and CH₃CH₂CH=CH-. Examples of the branched alkenyl groups include terminal alkenyl groups such as CH₂=C(CH₃)- and CH₂=C(CH₃)CH₂-, and internal alkenyl groups such as CH(CH₃)=CH- and CH₃C(CH₃)=CH₂-.

The alkynyl groups having 2 to 4 carbon atoms may be linear or branched. Moreover, the alkynyl groups may be terminal alkynyl groups having an unsaturated bond at the end, or may be internal alkynyl groups internally having an unsaturated bond. Examples of the linear alkynyl groups include terminal alkynyl groups such as CH=C-, CH≡CCH₂-, and CH≡CCH₂CH₂-, and internal alkynyl groups such as CH₃C≡C-, CH₂C≡CCH₂-, and CH₂CH₂C≡CH₂-.

From the viewpoint of improving the thermal resistance and the flame retardancy, it is preferable that R¹, R², R³, and R⁴ in the formula (1) each represent a hydrogen atom or a linear alkyl group having 1 to 4 carbon atoms, more preferably a hydrogen atom or a methyl group, and particularly preferably a methyl group.

In the present invention, it is preferable to use compounds C-1 and C-2 below, or more preferably the compound C-1, as the compound expressed by the formula (1).

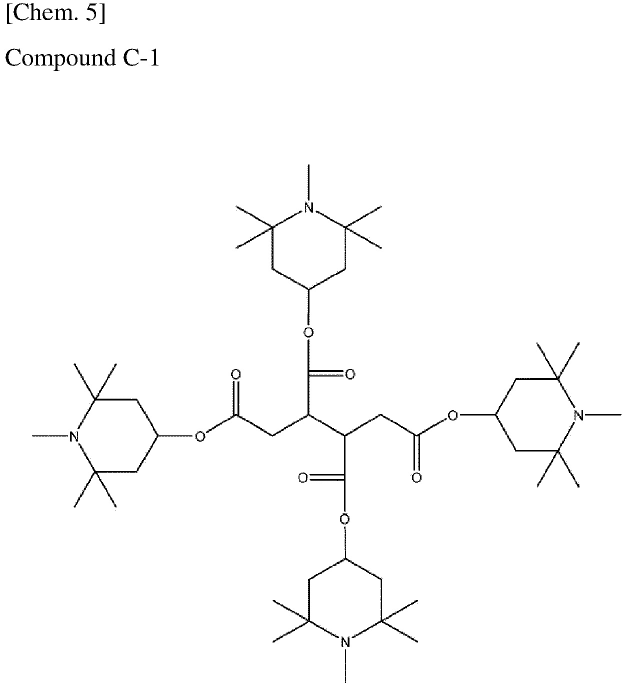

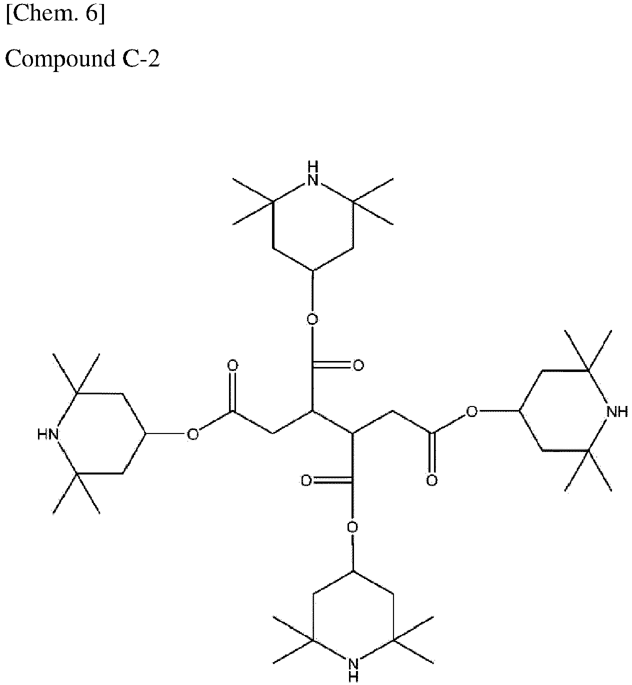

In the additive composition of the present invention, one compound may be used alone as the component (C), or two or more compounds may be used in combination.

With regard to the amount of the component (C) that is contained in the additive composition of the present invention, from the viewpoint of improving the thermal resistance and the flame retardancy, the content ratio (A):(C) by mass of the component (A) to the component (C) is preferably (A):(C) = 99.95:0.05 to 85:15, more preferably (A):(C) = 99.9:0.1 to 90:10, and even more preferably (A):(C) = 99.8:0.2 to 95:5. The amount of the component (C) that is contained in the additive composition can be measured using an oxidative decomposition-chemiluminescence method, for example.

Next, the component (D) contained in the additive composition of the present invention will be described. The component (D) is a phenolic antioxidant.

Examples of the phenolic antioxidant include 2,6-di-tert-butyl-p-cresol, 2,6-diphenyl-4-octadecyloxyphenol, distearyl(3,5-di-tert-butyl-4-hydroxybenzyl)phosphonate, 1,6-hexamethylenebis[(3,5-di-tert-butyl-4-hydroxyphenyl)propionamide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2' -ethylidenebis(4,6-di-tert-butylphenol), 2,2' -ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, tetrakis[3 -(3,5-di-tert-butyl-4-hydroxyphenyl)methyl propionate] methane, thiodiethyleneglycolbis[(3,5-di-tert-butyl-4-hydroxyphenyl)propionate], 1,6-hexamethylenebis[(3,5-di-tert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl]isocyanurate, 3,9-bis[1,1-dimethyl-2-{(3-tert-butyl-4-hydroxy-5-methylphenyl)propionyloxy }ethyl]-2,4 ,8,10-tetraoxaspiro[5,5]undecane, and triethylene glycol bis[(3-tert-butyl-4-hydroxy-5-methylphenyl)propionate].

From the viewpoint of improving the thermal resistance and the flame retardancy, it is preferable that the component (D) of the additive composition of the present invention is a compound expressed by the formula (2) below or a compound expressed by the formula (3), and is more preferably a compound expressed by the formula (2) below.

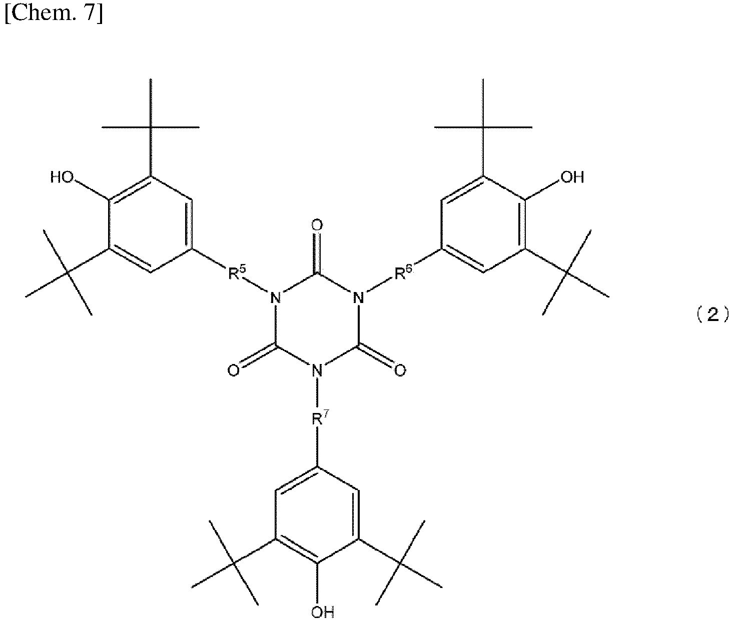

In the above formula, R⁵, R⁶, and R⁷ each independently represent a divalent hydrocarbon group having 1 to 3 carbon atoms. Examples of this hydrocarbon group having 1 to 3 carbon atoms include alkylene groups having 1 to 3 carbon atoms, alkenylene groups having 2 to 3 carbon atoms, and alkynylene groups having 2 to 3 carbon atoms.

In the case where R⁵, R⁶, and R⁷ each represent an alkylene group having 1 to 3 carbon atoms, the alkylene group may be linear or branched. Examples of the linear alkylene group include -(CH₂)ₙ-, where n is an integer from 1 to 3. Examples of the branched alkylene group include -CH(CH₃)-, -CH₂(CH₂CH₃)-, -CH(CH₃)CH₂-, and -CH₂CH(CH₃)-.

In the case where R⁵, R⁶, and R⁷ each represent an alkenylene group having 2 to 3 carbon atoms, the alkenylene group may be linear or branched. Examples of the linear alkenylene group include -CH=CH-, -CH=CH-CH₂-, and -CH₂-CH=CH-. Examples of the branched alkenylene group include -C(CH₃)=CH- and -CH=C(CH₃)-.

In the case where R⁵, R⁶, and R⁷ each represent an alkynylene group having 2 to 3 carbon atoms, examples of the alkynylene group include -C=C-, -CH₂-C≡C-, and -C≡C-CH₂-.

In the additive composition of the present invention, from the viewpoint of improving the thermal resistance and the flame retardancy, it is preferable that R⁵, R⁶, and R⁷ in the formula (2) each independently represent a linear alkylene group having 1 to 3 carbon atoms, such as a methylene group, an ethylene group, and an n-propylene group, and more preferably a methylene group.

Specific examples of the compound expressed by the formula (2) above include 1,3,5-tris(3,5-di-tert-butyl-4-hydroxybenzyl)isocyanurate, 1,3,5-tris(3,5-di-tert-butyl-4-hydroxyphenylethyl)isocyanurate, and 1,3,5-tris(3,5-di-tert-butyl-4-hydroxyphenylpropyl)isocyanurate. From the viewpoint of improving the thermal resistance and the flame retardancy, it is preferable to use 1,3,5-tris(3,5-di-tert-butyl-4-hydroxybenzyl)isocyanurate, that is, a compound D-1 below.

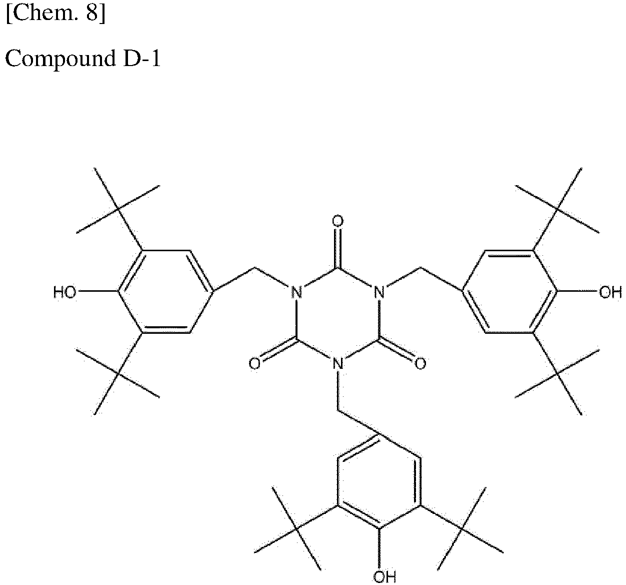

Compounds expressed by the formula (3) that can be favorably used as the component (D) are as follows.

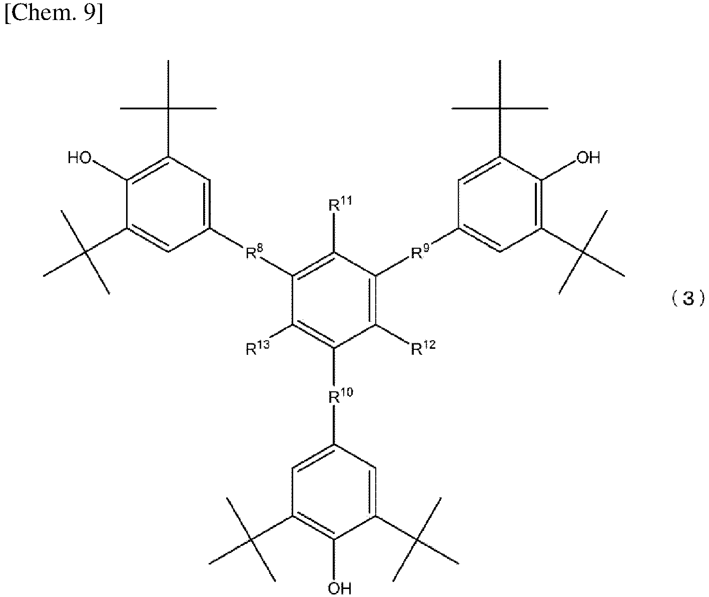

In the formula, R⁸, R⁹, and R¹⁰ each independently represent a divalent hydrocarbon group having 1 to 3 carbon atoms, and R¹¹, R¹², and R¹³ each independently represent a hydrogen atom or a monovalent hydrocarbon group having 1 to 4 carbon atoms.

The divalent hydrocarbon group having 1 to 3 carbon atoms represented by R⁸, R⁹, and R¹⁰ in the formula (3) above may be the same as the divalent hydrocarbon group having 1 to 3 carbon atoms represented by R⁵, R⁶, and R⁷ above. From the viewpoint of improving the thermal resistance and the flame retardancy, R⁸, R⁹, and R¹⁰ preferably each represent a linear alkylene group having 1 to 3 carbon atoms, such as a methylene group, an ethylene group, and an n-propylene group, and more preferably a methylene group.

The monovalent hydrocarbon group having 1 to 4 carbon atoms represented by R¹¹, R¹², and R¹³ in the formula (3) above may be the same as the monovalent hydrocarbon group having 1 to 4 carbon atoms represented by R¹, R², R³, and R⁴ above. From the viewpoint of improving the thermal resistance and the flame retardancy, R¹¹, R¹², and R¹³ preferably each represent a linear alkyl group, such as a methyl group, an ethyl group, an n-propyl group, and an n-butyl group, and more preferably a methyl group.

Specific examples of the compound expressed by the formula (3) above include 1,3,5-tris(3,5-di-tert-butyl-4-hydroxybenzyl)-2,4,6-trimethylbenzene, 1,3,5-tris(3,5-di-tert-butyl-4-hydroxyphenylethyl)-2,4,6-trimethylbenzene, 1,3,5-tris(3,5-di-tert-butyl-4-hydroxyphenylpropyl)-2,4,6-trimethylbenzene, 1,3,5-tris(3,5-di-tert-butyl-4-hydroxybenzyl)-2,4,6-triethylbenzene, 1,3,5-tris(3,5-di-tert-butyl-4-hydroxybenzyl)-2,4,6-tripropylbenzene, 1,3,5-tris(3,5-di-tert-butyl-4-hydroxybenzyl)-2,4,6-tributylbenzene, and 1,3,5-tris(3,5-di-tert-butyl-4-hydroxybenzyl)benzene. From the viewpoint of improving the thermal resistance and the flame retardancy, it is preferable to use 1,3,5-tris(3,5-di-tert-butyl-4-hydroxybenzyl)-2,4,6-trimethylbenzene, that is, a compound D-2 below.

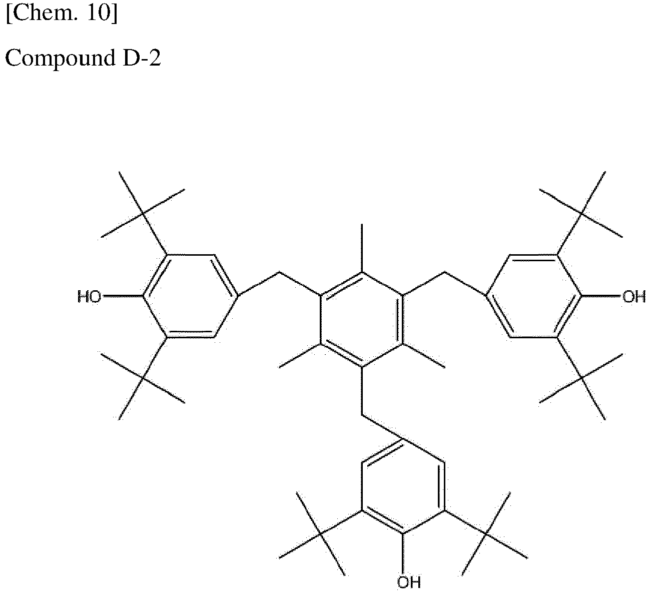

As the component (D) of the additive composition of the present invention, either a compound expressed by the formula (2) or a compound expressed by the formula (3) may be used alone, or a compound expressed by the formula (2) and a compound expressed by the formula (3) may be used in combination. In the case where the component (D) contains a compound expressed by the formula (2), one compound expressed by the formula (2) may be used alone, or two or more compounds expressed by the formula (2) may be used in combination. In the case where the component (D) contains a compound expressed by the formula (3), one compound expressed by the formula (3) may be used alone, or two or more compounds expressed by the formula (3) may be used in combination. In the case where a compound expressed by the formula (2) and a compound expressed by the formula (3) are used in combination, the blending ratio between the compound expressed by the formula (2) and the compound expressed by the formula (3) can be determined as appropriate.

With regard to the amount of the component (D) that is contained in the additive composition of the present invention, from the viewpoint of improving the thermal resistance and the flame retardancy, the content ratio (A):(D) by mass of the component (A) to the component (D) is preferably (A):(D) = 99.95:0.05 to 85:15, more preferably (A):(D) = 99.9:0.1 to 90:10, and even more preferably (A):(D) = 99.8:0.2 to 95:5. The amount of the component (D) that is contained in the additive composition can be measured using gas chromatography, for example.

The additive composition of the present invention can be produced by mixing the components (A), (B), (C), and (D). In the present invention, it is possible to prepare a mixture by mixing the components (A), (B), (C), and (D) and then add the prepared mixture to the synthetic resin. Alternatively, it is possible to separately add the individual components (A), (B), (C), and (D) to the synthetic resin. Alternatively, it is possible to produce a masterbatch from the components (A), (B), (C), and (D) and add the masterbatch to the synthetic resin. The mixing of the components (A), (B), (C), and (D) and other optional components can be performed using various types of mixers. Specific examples of the mixers include a tumbler mixer, a Henschel mixer, a ribbon blender, a V-type mixer, a W-type mixer, a super mixer, and a Nauta mixer. In the case of producing a masterbatch, masterbatching can be performed using a twin-screw extruder.

From the viewpoint of improving the thermal resistance and the flame retardancy, it is preferable that the additive composition of the present invention contains an inorganic filler. There are no particular limitations on the particle size, aspect ratio, and the like of the inorganic filler, and commercially available products for thermoplastic resins can be used. Examples of the inorganic filler include talc, mica, silica, calcium carbonate, and barium sulfate. The particle surface of these inorganic fillers may be coated with a coupling agent such as a silane coupling agent, a fatty acid, a fatty acid metal salt, a fatty acid ester, or the like. One type of inorganic filler may be used alone, or two or more types may be used in combination. From the viewpoint of improving the thermal resistance and the flame retardancy, talc is preferably used as the inorganic filler.

With regard to the inorganic filler content, from the viewpoint of improving the thermal resistance and the flame retardancy, the content ratio (A):inorganic filler by mass of the component (A) to the inorganic filler is preferably (A):inorganic filler = 99:1 to 30:70, more preferably (A):inorganic filler = 95:5 to 40:60, even more preferably (A):inorganic filler = 90:10 to 50:50, and particularly preferably (A):inorganic filler = 85:15 to 60:40.

The additive composition of the present invention may also contain, if necessary, an anti-dripping agent, as long as the effects of the present invention are not impaired. Examples of the anti-dripping agent include fluorine-based anti-dripping agents, silicone rubbers, and phyllosilicates. Examples of the phyllosilicates include: smectite-based clay minerals such as montmorillonite, saponite, hectorite, beidellite, stevensite, and nontronite; vermiculite; halloysite; swelling mica; and talc. It is also possible to use a phyllosilicate in which organic cations, quaternary ammonium cations, or phosphonium cations are intercalated between the sheets.

In the additive composition of the present invention, a fluorine-based anti-dripping agent is preferably used as the anti-dripping agent. Specific examples of the fluorine-based anti-dripping agent include: fluorine-based resins such as polytetrafluoroethylene, polyvinylidene fluoride, and polyhexafluoropropylene; perfluoroalkane sulfonic acid alkali metal salt compounds such as a perfluoromethane sulfonic acid sodium salt, a perfluoro-n-butane sulfonic acid potassium salt, a perfluoro-t-butane sulfonic acid potassium salt, a perfluorooctane sulfonic acid sodium salt, and a perfluoro-2-ethylhexane sulfonic acid calcium salt; and perfluoroalkane sulfonic acid alkaline earth metal salts. In terms of anti-dripping properties, polytetrafluoroethylene is preferably used.

The additive composition of the present invention may further contain, if necessary, one or more of organic flame retardants, inorganic flame retardants, and flame-retardant aids, as long as the effects of the present invention are not impaired. Examples of these flame retardants and flame-retardant aids include: a metal oxide, a polyhydric alcohol compound, a metal hydroxide, a phosphoric acid ester-based flame retardant, a condensed phosphoric acid ester-based flame retardant, a phosphate-based flame retardant, an inorganic phosphorus-based flame retardant, a phosphoric acid salt-based flame retardant, a silicone-based flame retardant, a boric acid compound, an expandable graphite, other inorganic flame-retardant aids, and other organic flame-retardant aids. These flame retardants or flame-retardant aids may be added to the additive composition of the present invention in advance, or may be added to the synthetic resin when adding the additive composition of the present invention to the synthetic resin.

Specific examples of the metal oxide include zinc oxide, titanium oxide, magnesium oxide, and silicon oxide. The metal oxide may be surface-treated. As the zinc oxide, commercially available products can be used. Examples of commercially available products of the metal oxide include: zinc oxide Grade 1 (manufactured by Mitsui Mining & Smelting Co., Ltd.), partially coated zinc oxide (manufactured by Mitsui Mining & Smelting Co., Ltd.), Nanofine 50 (ultrafine zinc oxide particles having an average particle size of 0.02 µm: manufactured by Sakai Chemical Industry Co., Ltd.), and Nanofine K (ultrafine zinc oxide particles that are coated with zinc silicate and have an average particle size of 0.02 µm: manufactured by Sakai Chemical Industry Co., Ltd.).

The polyhydric alcohol compound refers to a compound in which a plurality of hydroxyl groups are bonded, and is added as a flame-retardant aid for improving the flame retardancy. Examples of the polyhydric alcohol compound include: pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate, polyethylene glycol, glycerin, diglycerin, mannitol, maltitol, lactitol, sorbitol, erythritol, xylitol, xylose, sucrose, trehalose, inositol, fructose, maltose, and lactose. Of these compounds, pentaerythritol or a condensate of pentaerythritol such as pentaerythritol, dipentaerythritol, tripentaerythritol, and polypentaerythrito is preferable, a condensate of pentaerythritol is more preferable, and dipentaerythritol is particularly preferable. In addition, 1,3,5-tris(2-hydroxyethyl)isocyanurate and sorbitol can also be favorably used. The condensate of pentaerythritol may be a mixture of pentaerythritol and a condensate of pentaerythritol.

Examples of the metal hydroxide include: magnesium hydroxide, aluminum hydroxide, calcium hydroxide, barium hydroxide, zinc hydroxide, and KISUMA 5A (trademark of magnesium hydroxide manufactured by Kyowa Chemical Industry Co., Ltd.).

Examples of the phosphoric acid ester-based flame retardant include: trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, trisisopropylphenyl phosphate, 2-ethylhexyldiphenyl phosphate, t-butylphenyldiphenyl phosphate, bis-(t-butylphenyl)phenyl phosphate, tris-(t-butylphenyl)phosphate, isopropylphenyldiphenyl phosphate, bis-(isopropylphenyl)diphenyl phosphate, and tris-(isopropylphenyl)phosphate.

Examples of the condensed phosphoric acid ester-based flame retardant include: 1,3-phenylenebis(diphenyl phosphate), 1,3-phenylenebis(dixylenyl phosphate), bisphenol A bis(diphenyl phosphate), naphthalene-2,5-diyl-tetraphenyl bis(phosphate), [1,1'-biphenyl]-4,4'-diyl-tetraphenyl bis(phosphate), [1,1'-biphenyl]-4,4'-diyl-tetrakis(2,6-dimethylphenyl)bis(phosphate), tetraphenyl(thiobis(4, 1-phenylene))bis(phosphate), and tetraphenyl(sulfonylbis(4,1-phenylene))bis(phosphate).

Examples of the inorganic phosphorus-based flame retardant include red phosphorus.

Examples of the phosphoric acid salt-based flame retardant include: amine salts of phosphoric acid, amine salts of pyrophosphoric acid, and amine salts of polyphosphoric acid, and examples include ammonium phosphate, ammonium pyrophosphate, ammonium polyphosphate, melamine phosphate, melamine pyrophosphate, piperazine phosphate, piperazine pyrophosphate, and piperazine polyphosphate.

Examples of the other inorganic flame-retardant aids include: inorganic compounds such as titanium oxide, aluminum oxide, magnesium oxide, and hydrotalcite, and surface-treated products of the above compounds. As specific examples, various types of commercially available products can be used, such as TIPAQUE R-680 (trademark of titanium oxide manufactured by Ishihara Sangyo Kaisha, Ltd.), Kyowamag 150 (trademark of magnesium oxide manufactured by Kyowa Chemical Industry Co., Ltd.), DHT-4A (hydrotalcite manufactured by Kyowa Chemical Industry Co., Ltd.), and Alcamizer 4 (zinc-modified hydrotalcite manufactured by Kyowa Chemical Industry Co., Ltd.).

The additive composition of the present invention may also contain, if necessary, a phosphorus-based antioxidant, a thioether-based antioxidant, an ultraviolet absorber, a hindered amine-based light stabilizer other than compounds expressed by the formula (1), an antioxidant, or the like. These components may be added to the additive composition of the present invention in advance, or may be added to the synthetic resin when adding the additive composition of the present invention to the synthetic resin. These components advantageously stabilize the synthetic resin when added thereto.

Examples of the phosphorus-based antioxidant include: trisnonylphenyl phosphite, tris[2-tert-butyl-4-(3-tert-butyl-4-hydroxy-5-methylphenylthio)-5-methylphenyl]phosphit e, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2' -methylenebis(4,6-tert-butylphenyl)-octadecyl phosphite, 2,2' -ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)ami ne, and phosphites of 2-ethyl-2-butyl propylene glycol and 2,4,6-tri-tert-butylphenol. The phosphorus-based antioxidant may be added in such an amount that, when added to the synthetic resin, the amount of the phosphorus-based antioxidant is preferably 0.001 to 10 parts by mass, and more preferably 0.05 to 5 parts by mass, with respect to 100 parts by mass of the synthetic resin.

Examples of the thioether-based antioxidant include: dialkyl thiodipropionates such as dilauryl thiodipropionate, dimyristyl thiodipropionate, and distearyl thiodipropionate; and pentaerythritol tetra(β-alkylthiopropionic acid)esters. The thioether-based antioxidant may be added in such an amount that, when added to the synthetic resin, the amount of the thioether-based antioxidant is preferably 0.001 to 10 parts by mass, and more preferably 0.05 to 5 parts by mass, with respect to 100 parts by mass of the synthetic resin.

Examples of the ultraviolet absorber include: 2-hydroxybenzophenones such as 2,4-dihydroxy benzophenone, 2-hydroxy-4-methoxy benzophenone, 2-hydroxy-4-octoxy benzophenone, and 5,5' -methylenebis(2-hydroxy-4-methoxybenzophenone); 2-(2'-hydroxyphenyl)benzotriazoles such as 2-(2'-hydroxy-5' -methylphenyl)benzotriazole, 2-(2'-hydroxy-3',5' -di-tert-butylphenyl)-5-chlorobenzotriazole, 2-(2'-hydroxy-3' -tert-butyl-5' -methylphenyl)-5-chlorobenzotriazole, 2-(2'-hydroxy-5' -tert-octylphenyl)benzotriazole, 2-(2'-hydroxy-3',5'-dicumylphenyl)benzotriazole, 2,2' -methylenebis(4-tert-octyl-6-(benzotriazolyl)phenol), and 2-(2'-hydroxy-3'-tert-butyl-5'-carboxyphenyl)benzotriazole; benzoates such as phenyl salicyllate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxy oxanilide and 2-ethoxy-4'-dodecyl oxanilide; cyanoacrylates such as ethyl-α-cyano-β,β-diphenyl acrylate, and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. The ultraviolet absorber may be added in such an amount that, when added to the synthetic resin, the amount of the ultraviolet absorber is preferably 0.001 to 30 parts by mass, and more preferably 0.05 to 10 parts by mass, with respect to 100 parts by mass of the synthetic resin.

Examples of the hindered amine-based light stabilizer include: 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, bis(2,2,6,6-tetramethyl-4-piperidyl)·bis(tridecyl)-1,2,3,4-butanetetracarboxylate, bis(1,2,2,6,6-pentamethyl-4-piperidyl)·bis(tridecyl)-1,2,3,4-butanetetracarboxylate, bis(1,2,2,6,6-pentamethyl-4-piperidyl)-2-butyl-2-(3,5-di-tert-butyl-4-hydroxybenzyl)malo nate, 1,2,2,6,6-tetramethyl-4-piperidylmethacrylate, poly[{6-(1,1,3,3-tetramethylbutyl)amino-1,3,5-triazine-2,4-diyl}{(2,2,6,6-tetramethyl-4-p iperidyl)imino}hexamethylene{ (2,2,6,6-tetramethyl-4-piperidyl)imino}], a 1,2,3,4-butanecarboxylic acid/2,2-bis(hydroxymethyl)-1,3-propanediol/3-hydroxy-2,2-dimethylpropanal/1,2,2,6,6-pentamethyl-4-piperidinyl ester polycondensate, a bis(1,2,2,6,6-pentamethyl-4-piperidyl)=decanedioate/methyl=1,2,2,6,6-pentamethyl-4-pip eridyl=sebacate mixture, 2,2,6,6-tetramethyl-4-piperidylmethacrylate, a 1-(2-hydroxyethyl)-2,2,6,6-tetramethyl-4-piperidinol/diethyl succinate polycondensate, a 1,6-bis(2,2,6,6-tetramethyl-4-piperidylamino)hexane/dibromoethane polycondensate, a 1,6-bis(2,2,6,6-tetramethyl-4-piperidylamino)hexane/2,4-dichloro-6-morpholino-s-triazin e polycondensate, a 1,6-bis(2,2,6,6-tetramethyl-4-piperidylamino)hexane/2,4-dichloro-6-tert-octylamino-s-tria zine polycondensate, 1,5,8,12-tetrakis[2,4-bis(N-butyl-N-(2,2,6,6-tetramethyl-4-piperidyl)amino)-s-triazin-6-yl ]-1,5,8,12-tetraazadodecane, 1,5,8,12-tetrakis[2,4-bis(N-butyl-N-(1,2,2,6,6-pentamethyl-4-piperidyl)amino)-s-triazin-6 -yl]-1,5,8,12-tetraazadodecane, 1,6,11-tris[2,4-bis(N-butyl-N-(2,2,6,6-tetramethyl-4-piperidyl)amino)-s-triazin-6-ylamino ]undecane, 1,6,11-tris[2,4-bis(N-butyl-N-(1,2,2,6,6-pentamethyl-4-piperidyl)amino)-s-triazin-6-ylami no]undecane, 3,9-bis[1,1-dimethyl-2-{tris(2,2,6,6-tetramethyl-4-piperidyloxycarbonyl)butylcarbonylox y}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyl oxy}ethyl]-2,4,8,10-tetraoxaspiro[5.5]undecane, bis(1-undecyloxy-2,2,6,6-tetramethylpiperidin-4-yl)carbonate, 2,2,6,6-tetramethyl-4-piperidyl hexadecanoate, and 2,2,6,6-tetramethyl-4-piperidyl octadecanoate. The hindered amine-based light stabilizer may be added in such an amount that, when added to the synthetic resin, the amount of the hindered amine-based light stabilizer is preferably 0.001 to 30 parts by mass, and more preferably 0.05 to 10 parts by mass, with respect to 100 parts by mass of the synthetic resin.

Examples of the antioxidant include a naphthylamine-based antioxidant, a diphenylamine-based antioxidant, a p-phenyldiamine-based antioxidant, a quinoline-based antioxidant, a hydroquinone derivative, a monophenol-based antioxidant, a thiobisphenol-based antioxidant, a hindered phenol-based antioxidant, and a phosphorous acid ester-based antioxidant. The antioxidant may be added in such an amount that, when added to the synthetic resin, the amount of the antioxidant is preferably 0.001 to 10 parts by mass, and more preferably 0.05 to 5 parts by mass, with respect to 100 parts by mass of the synthetic resin.

The additive composition of the present invention may also contain a reinforcement material as an optional component, as long as the effects of the present invention are not impaired. The reinforcement material may be added to the synthetic resin when adding the additive composition of the present invention to the synthetic resin. As the reinforcement material, it is possible to use fibrous, platy, particulate, and powder reinforcement materials that are commonly used to reinforce synthetic resins. Specific examples thereof include: inorganic fibrous reinforcement materials such as glass fibers, asbestos fibers, carbon fibers, graphite fibers, metal fibers, potassium titanate whiskers, aluminum borate whiskers, magnesium-based whiskers, silicon-based whiskers, wollastonite, sepiolite, asbestos, slug fibers, zonolite, ellestadite, gypsum fibers, silica fibers, silica-alumina fibers, zirconia fibers, boron nitride fibers, silicon nitride fibers, and boron fibers; organic fibrous reinforcement materials such as polyester fibers, nylon fibers, acrylic fibers, regenerated cellulose fibers, acetate fibers, kenaf, ramie, cotton, jute, hemp, sisal, flax, linen, silk, manila hemp, sugar cane, wood pulp, wastepaper, recycled wastepaper, and wool; and platy and particulate reinforcement materials such as glass flakes, non-swelling mica, graphite, metal foil, ceramic beads, clay, mica, sericite, zeolite, bentonite, dolomite, kaolin, micronized silicic acid, feldspar powder, potassium titanate, shirasu balloons, calcium carbonate, magnesium carbonate, barium sulfate, calcium oxide, aluminum oxide, titanium oxide, aluminum silicate, silicon oxide, gypsum, novaculite, dawsonite, and white clay. The reinforcement material may be coated with or bundled by a thermoplastic resin such as an ethylene/vinyl acetate copolymer or a thermosetting resin such as epoxy resin, or may be treated with a coupling agent such as amino silane or epoxy silane.

The additive composition of the present invention may further contain a crystal nucleator as an optional component, as long as the effects of the present invention are not impaired. As the crystal nucleator, crystal nucleators commonly used for polymers can be used as appropriate. In the present invention, it is possible to use either an inorganic crystal nucleator or an organic crystal nucleator. These components may be added to the synthetic resin when adding the additive composition of the present invention to the synthetic resin.

Specific examples of the inorganic crystal nucleator include: metallic salts such as kaolinite, synthetic mica, clay, zeolite, silica, graphite, carbon black, magnesium oxide, titanium oxide, calcium sulfide, boron nitride, calcium carbonate, barium sulfate, aluminum oxide, neodymium oxide, and phenylphosphonate. These inorganic crystal nucleators may be modified with an organic substance in order to enhance dispersibility in the composition.

Specific examples of the organic crystal nucleator include: organic carboxylic acid metal salts such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexane carboxylate; organic sulfonic acid salts such as sodium p-toluenesulfonate and sodium sulfoisophthalate; carboxylic amides such as stearic amide, ethylenebis lauric amide, palmitic amide, hydroxy stearic amide, erucic amide, and trimesic acid tris(t-butylamide); benzylidene sorbitol and derivatives thereof; phosphorus compound metal salts such as sodium-2,2'-methylenebis(4,6-di-t-butylphenyl)phosphate; and 2,2-methylbis(4,6-di-t-butylphenyl)sodium.

The additive composition of the present invention may also contain a known neutralizer as an optional component in order to neutralize a residual catalyst in the synthetic resin, as long as the effects of the present invention are not impaired. Examples of the neutralizer include: fatty acid metal salts such as calcium stearate, lithium stearate, and sodium stearate; and fatty acid amide compounds such as ethylenebis(stearamide), ethylenebis(12-hydroxystearamide), and stearic acid amide. These neutralizers may be mixed and used.

The additive composition of the present invention may further contain an acrylic processing aid as an optional component, as long as the effects of the present invention are not impaired. As the acrylic processing aid, a polymer of a (meth)acrylic acid ester or a copolymer of two or more (meth)acrylic acid esters can be used. These components may be added to the synthetic resin when adding the additive composition of the present invention to the synthetic resin. Examples of the polymerized (meth)acrylic acid ester or copolymerized (meth)acrylic acid esters include (meth)acrylic acid esters such as methyl acrylate, methyl methacrylate, ethyl acrylate, ethyl methacrylate, n-propyl acrylate, isopropyl acrylate, n-propyl methacrylate, isopropyl methacrylate, n-butyl acrylate, isobutyl acrylate, t-butyl methacrylate, n-hexyl acrylate, n-hexyl methacrylate, 2-ethylhexyl acrylate, 2-ethylhexyl methacrylate, dodecyl methacrylate, and tridecyl methacrylate. In addition to the above, further examples include (meth)acrylic acids and (meth)acrylic acid esters containing a hydroxy group.

The additive composition of the present invention may also contain a plasticizer as an optional component, as long as the effects of the present invention are not impaired. As the plasticizer, plasticizers commonly used for polymers can be used as appropriate, and examples thereof include a polyester-based plasticizer, a glycerin-based plasticizer, a polycarboxylic acid ester-based plasticizer, a polyalkylene glycol-based plasticizer, an ether ester-based plasticizer, an epoxy-based plasticizer, and the like. These components may be added to the synthetic resin when adding the additive composition of the present invention to the synthetic resin.

The additive composition of the present invention may also contain, if necessary, additives that are usually used in synthetic resins such as a cross-linking agent, an antistatic agent, a metallic soap, a filler such as talc, an antifog agent, a plate-out preventing agent, a lubricant, a surface treating agent, a fluorescent agent, a fungicide, a bactericide, a foaming agent, a metal deactivating agent, a mold release agent, a pigment, and a processing aid other than an acrylic processing aid, as long as the effects of the present invention are not impaired. These components may be added to the synthetic resin when adding the additive composition of the present invention to the synthetic resin.

The additive composition of the present invention can impart excellent thermal resistance and flame retardancy to a synthetic resin, and thus can be favorably used as a flame retardant composition.

Next, a flame-retardant synthetic resin composition of the present invention will be described. The flame-retardant synthetic resin composition of the present invention contains a synthetic resin and the additive composition of the present invention. The flame-retardant synthetic resin composition of the present invention has excellent thermal resistance and flame retardancy.

Specific examples of the synthetic resin contained in the flame-retardant synthetic resin composition of the present invention include: polyolefin-based resins, such as α-olefin polymers such as polyethylene, low-density polyethylene, linear low-density polyethylene, high-density polyethylene, polypropylene, homopolypropylene, random copolymer polypropylene, block copolymer polypropylene, impact copolymer polypropylene, high impact copolymer polypropylene, isotactic polypropylene, syndiotactic polypropylene, hemiisotactic polypropylene, maleic anhydride-modified polypropylene, polybutene, cyclo olefin polymers, stereoblock polypropylene, poly-3-methyl-1-butene, poly-3-methyl-1-pentene, and poly-4-methyl-1-pentene, as well as α-olefin polymers such as ethylene-vinyl acetate copolymers, ethylene-methyl methacrylate copolymers, ethylene-ethyl acrylate copolymers, and ethylene-propylene copolymers; halogen-containing resins, such as polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic acid ester copolymers, vinyl chloride-maleic acid ester copolymers, and vinyl chloride-cyclohexylmaleimide copolymers; petroleum resin, coumarone resin, polystyrene, polyvinyl acetate, acrylic resin, polymethyl methacrylate, polyvinyl alcohol, polyvinyl formal, and polyvinyl butyral; aromatic polyesters, such as polyalkylene terephthalates such as polyethylene terephthalate, polybutylene terephthalate, and polycyclohexane dimethylene terephthalate, and polyalkylene naphthalates such as polyethylene naphthalate and polybutylene naphthalate, as well as linear polyesters, such as polytetramethylene terephthalate; degradable aliphatic polyesters, such as polyhydroxybutyrate, polycaprolactone, polybutylene succinate, polyethylene succinate, polylactic acid resin, polymalic acid, polyglycolic acid, polydioxane, and poly(2-oxetanone); thermoplastic resins, such as polyphenylene oxide, polyamides such as polycaprolactam and polyhexamethylene adipamide, polycarbonate, branched polycarbonate, polyacetal, polyphenylene sulfide, polyurethane, and cellulose-based resin, as well as blends of these thermoplastic resins, or thermosetting resins, such as phenolic resin, urea resin, melamine resin, epoxy resin, and unsaturated polyester resin; fluorine-based resin, silicone resin, silicone rubber, polyethersulfone, polysulfone, polyphenylene ether, polyetherketone, polyetheretherketone, and liquid crystal polymer. Further examples include: isoprene rubber, butadiene rubber, acrylonitrile-butadiene copolymer rubber, styrene-butadiene copolymer rubber, fluororubber, and silicone rubber.

Moreover, other specific examples of the synthetic resin include: plastic elastomers, such as olefin-based thermoplastic elastomers, styrene-based thermoplastic elastomers, polyester-based thermoplastic elastomers, nitrile-based thermoplastic elastomers, nylon-based thermoplastic elastomers, vinyl chloride-based thermoplastic elastomers, polyamide-based thermoplastic elastomers, and polyurethane-based thermoplastic elastomers.

In the present invention, polyolefin-based resins, which can impart excellent flame retardancy, are preferably used as the synthetic resin.

In the present invention, one of the above-described synthetic resins may be used alone, or two or more of the synthetic resins may be combined and alloyed.

The synthetic resin contained in the flame-retardant synthetic resin composition of the present invention can be used regardless of the molecular weight, the degree of polymerization, the density, the softening point, the proportion of insoluble substances in solvents, the degree of stereoregularity, the presence or absence of catalyst residue, the type and blending ratio of starting monomer, the type of polymerization catalyst (e.g., a Ziegler catalyst, a metallocene catalyst, etc.), and the like.

From the viewpoint of improving the thermal resistance and the flame retardancy, the amount of the above-described additive composition that is contained in the flame-retardant synthetic resin composition of the present invention is preferably such that the amount of the component (A), which is contained in the additive composition, is 10 to 100 parts by mass, and more preferably 20 to 60 parts by mass, with respect to 100 parts by mass of the synthetic resin. Setting the component (A) content within the above-described range advantageously makes it possible to obtain a flame-retardant synthetic resin composition having excellent flame retardancy and physical properties.

A formed product formed from the flame-retardant synthetic resin composition of the present invention contains the additive composition of the present invention and therefore has excellent thermal resistance and flame retardancy. There is no particular limitation on the forming method with which the flame-retardant synthetic resin composition is formed into the formed product, and known methods can be employed. For example, extrusion, calendering, injection molding, rolling, compression molding, blow molding, and the like can be used as the forming method. The flame-retardant synthetic resin composition can be formed into formed products having various shapes, such as resin plates, sheets, films, and profiles.

The flame-retardant synthetic resin composition, and the formed product obtained therefrom, of the present invention can be used in housings (frames, casings, covers, and exterior components) and components for electric automobiles, machinery, electric and electronic devices, office automation equipment, and the like; and automobile interior and exterior materials; and the like.

Moreover, the flame-retardant synthetic resin composition, and the formed product obtained therefrom, of the present invention can be used in a wide variety of industrial fields such as electric, electronic and communication fields, agriculture, forestry and fishery fields, mining, construction, foods, fibers, clothing, medical care, coal, petroleum, rubber, leather, automobiles, precision equipment, wood materials, building materials, public engineering materials, furniture, printing, and musical instruments. More specifically, they can be used in applications including: housings (frames, casings, covers, and exterior components) and components for office supplies and office automation equipment such as a printer, a personal computer, a word processor, a keyboard, a PDA (personal digital assistant), a telephone, a copy machine, a facsimile machine, an ECR (electronic cash register), an electronic calculator, an electronic organizer, a card, a holder, and stationery, household electric appliances such as a washing machine, a refrigerator, a vacuum cleaner, a microwave oven, a luminaire, a gaming console, an iron, a Japanese table heater, audiovisual (AV) equipment such as a television (TV) set, a videotape recorder (VTR), a video camera, a radio-cassette recorder, a tape recorder, a mini disc, a CD player, a speaker, and a liquid crystal display, electric and electronic components such as a connector, a relay, a capacitor, a switch, a printed-circuit board, a coil bobbin, a semiconductor sealing material, an LED sealing material, an electric wire, a cable, a transformer, a deflection yoke, a distribution switch board, and a clock, communication devices, office automation equipment, and the like; and automobile interior and exterior materials.

Furthermore, the flame-retardant synthetic resin composition, and the formed product obtained therefrom, of the present invention can be used in the following wide variety of applications: materials for automobile, hybrid car, electric vehicle, vehicle, vessel, aircraft, building, house and construction purposes such as a seat (padding, surface material, etc.), a belt, a ceiling covering, a convertible top cover, an armrest, a door trim, a rear package tray, a carpet, a mat, a sun visor, a wheel cover, a mattress cover, an airbag, an insulating material, a strap hanger, a strap hanger belt, an electric wire coating material, an electric insulating material, a paint, a coating material, a covering material, a floor material, a corner wall, a carpet, a wall paper, a wall covering material, an exterior material, an interior material, a roofing material, a decking material, a wall material, a post material, a floor plate, a fence material, a framework and a molding, a window and a door forming material, a shingle, a panel, a terrace, a balcony, a sound insulation plate, a heat insulation plate, and a window material; a public engineering material; clothing, a curtain, a sheet, a plywood board, a synthetic fiber plate, a rug, a door mat, a seat, a bucket, a hose, a container, a pair of glasses, a bag, a case, a pair of goggles, a pair of skis, a racket, a tent, a music instrument, and other houseware goods and sports goods.

The present invention also provides a method for causing a synthetic resin to be flame-retardant. The method for causing a synthetic resin to be flame-retardant of the present invention includes adding an additive composition containing components (A), (B), (C), and (D) to a synthetic resin. According to the method for causing a synthetic resin to be flame-retardant of the present invention, excellent thermal resistance and flame retardancy can be imparted to a synthetic resin. The additive composition containing the components (A), (B), (C), and (D) and the synthetic resin that are used in the method of the present invention are as described above.

### Examples

Hereinafter, the present invention will be described in greater detail by way of examples. Note that the present invention is not limited to the following examples.

### Preparation of Additive Compositions 1 to 8 of Examples 1 to 8 and Comparative Additive Compositions 1 to 12 of Comparative Examples 1 to 12

Additive compositions 1 to 8 and comparative additive compositions 1 to 12 were prepared by blending the components listed in Tables 1 and 2 below in the blending ratios (parts by mass) shown those tables. In the tables, C-1 and C-2, and D-1 and D-2 are as described above. The compound D-3 and the comparative compound 1 indicate the following compounds.

**Table 1**

| | | Examples | | | | | | | |
|---|---|---|---|---|---|---|---|---|---|
| | | 1 | 2 | 3 | 4 | 5 | 6 | 7 | 8 |
| Component (A) | Bromine-based flame retardant^{∗1} | 100 | 100 | 100 | 100 | 100 | 100 | 100 | 100 |
| Component (B) | Antimony oxide^{∗2} | 33 | 33 | 33 | 33 | 33 | 33 | 33 | 33 |
| Component (C) | Compound C-1 | 0.25 | 0.75 | 1.5 | 0.75 | 0.75 | | | |
| | Compound C-2 | | | | | | 0.75 | 0.75 | 0.75 |
| | Comparative Compound 1 | | | | | | | | |
| Component (D) | Compound D-1 | 0.25 | 0.75 | 1.5 | | | 0.75 | | |
| | Compound D-2 | | | | 0.75 | | | 0.75 | |
| | Compound D-3 | | | | | 0.75 | | | 0.75 |

| | | | | | | | | | |
|---|---|---|---|---|---|---|---|---|---|
| ^{∗}1: 1,2-Bis(pentabromophenyl)ethane ^{∗}2: Antimony trioxide | | | | | | | | | |

**Table 2**

| | | Comparative Examples | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Component (A) | Bromine-based flame retardant^{∗1} | 100 | 100 | 100 | 100 | 100 | 100 | 100 | 100 | 100 | 100 | 100 | 100 |
| Component (B) | Antimony oxide | 33 | 33 | 33 | 33 | 33 | 33 | 33 | 33 | 33 | 33 | 33 | 33 |
| Component (C) | Compound C-1 | | 0.75 | 1.5 | | | | | | | | | |
| | Compound C-2 | | | | 0.75 | | | | | | | | |
| | Comparative Compound 1 | | | | | | | | | 0.75 | 1.5 | 0.75 | 0.75 |
| Component (D) | Compound D-1 | | | | | 0.75 | 1.5 | | | 0.75 | 1.5 | | |
| | Compound D-2 | | | | | | | 0.75 | | | | 0.75 | |
| | Compound D-3 | | | | | | | | 0.75 | | | | 0.75 |

| | | | | | | | | | | | | | |
|---|---|---|---|---|---|---|---|---|---|---|---|---|---|
| ^{∗}1: 1,2-Bis(pentabromophenyl)ethane ^{∗}2: Antimony trioxide | | | | | | | | | | | | | |

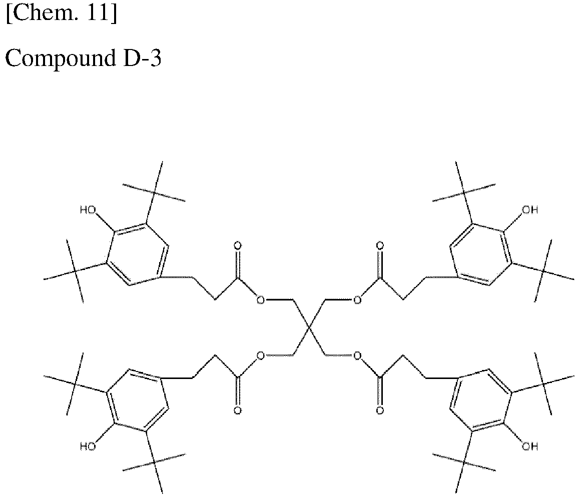

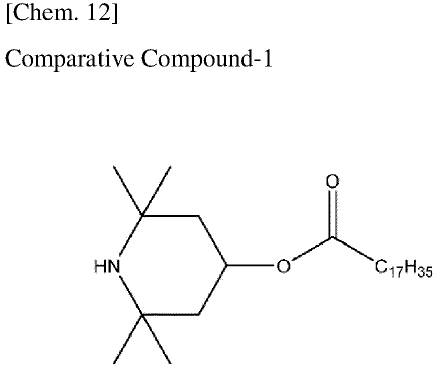

### Preparation of Flame-Retardant Polypropylene Resin Composition of Example 9

A polypropylene resin composition was prepared by adding 0.1 parts by mass of calcium stearate (lubricant), 0.1 parts by mass of bis(2,6-di-tert-butyl-4-methylphenyl)pentaerythritol diphosphite (phosphorus-based antioxidant), 0.3 parts by mass of glycerin monostearate (lubricant), and 15 parts by mass of talc (inorganic filler) to 60 parts by mass of polypropylene (melt flow rate = 12 g/10 min). To the prepared polypropylene resin composition was added 40 parts by mass of the additive composition 1 obtained in Example 1, and a flame-retardant polypropylene resin composition of Example 9 was thus obtained.

### Preparation of Flame-Retardant Polypropylene Resin Compositions of Examples 10 to 18 and Comparative Examples 13 to 24

Flame-retardant polypropylene resin compositions of Examples 10 to 18 were prepared in the same manner as that of Example 9 except that, instead of the additive composition 1, the additive compositions shown in Table 3 were used in the respective amounts (parts by mass) shown therein. Also, flame-retardant polypropylene resin compositions of Comparative Examples 13 to 24 were prepared in the same manner as that of Example 9 except that, instead of the additive composition 1, the comparative additive compositions shown in Table 4 were used in the respective amounts (parts by mass) shown therein.

### Production of Test Specimens

Test specimens with a size of 127 × 12.7 × 1.6 mm and test specimens with a size of 60 × 30 × 2 mm were produced by injection molding the flame-retardant polypropylene resin compositions of Examples 9 to 18 and Comparative Examples 13 to 24 at 200 to 220°C. The following tests were performed using the produced test specimens. Tables 3 to 4 show the results.

### UL-94V Flammability Test Method

A test specimen with a size of 127 × 12.7 × 1.6 mm was held vertically, and the flame of a burner was applied to a lower end of the test specimen for ten seconds and then removed, and the time taken until the flame on the test specimen extinguished was measured. The flame of the burner was applied for ten seconds for the second time at the same time when the flame on the test specimen extinguished, and the time taken until the flame on the test specimen extinguished was measured in the same manner as in the first time. At the same time, evaluation was made as to whether or not a cotton pad placed below the test specimen was burnt due to burning drips dropping thereon. Then, the test specimen was rated in accordance with the UL-94V standard based on the burning time obtained from the first measurement and the second measurement, whether or not the cotton pad was burnt, and the like. V-0 indicates the highest rate, and the flame retardancy decreases as the rating number increases to V-1 and V-2. A rate of NR was given to a test specimen that was not rated as any of the ratings V-0 to V-2. Those whose rating is at or lower than V-2 cannot be practically used.

### Cracks

A test specimen with a size of 60 × 30 × 2 mm was put in an oven at 150°C, and whether or not a crack occurred was visually checked every 24 hours, and the time taken until a crack occurred was measured. A longer time taken until a crack occurs indicates better thermal resistance, and a shorter time taken until a crack occurs indicates poorer thermal resistance. In the present invention, those in which a crack occurs in less than 800 hours cannot be practically used.

### Color Difference (Hue Test)

A test specimen with a size of 60 × 30 × 2 mm was put in an oven at 150°C, measurement was performed every 48 hours as defined in JIS Z 8781, and a color difference ΔE^{∗} was calculated from the measured values. The value ΔE^{∗} increases in accordance with deterioration of the color of the test specimen. In the present invention, evaluation was performed based on the time taken until the value ΔE^{∗} exceeded 5. A longer time taken until the value ΔE^{∗} exceeds 5 indicates better coloring resistance, and a shorter time taken until the value ΔE^{∗} exceeds 5 indicates poorer coloring resistance.

**Table 3**

| | Examples | | | | | | | | | |
|---|---|---|---|---|---|---|---|---|---|---|
| | 9 | 10 | 11 | 12 | 13 | 14 | 15 | 16 | 17 | 18 |
| Polypropylene resin composition | 60 | 60 | 60 | 60 | 60 | 60 | 60 | 60 | 60 | 60 |
| Additive composition 1 | 40 | | | | | | | | | |
| Additive composition 2 | | 40 | 35 | 45 | | | | | | |
| Additive composition 3 | | | | | 40 | | | | | |
| Additive composition 4 | | | | | | 40 | | | | |
| Additive composition 5 | | | | | | | 40 | | | |
| Additive composition 6 | | | | | | | | 40 | | |
| Additive composition 7 | | | | | | | | | 40 | |
| Additive composition 8 | | | | | | | | | | 40 |
| Flammability test (UL-94V) | V-0 | V-0 | V-0 | V-0 | V-0 | V-0 | V-0 | V-0 | V-0 | V-0 |
| Cracks (hr) | 960 | 1368 | 1320 | 1416 | 1584 | 1224 | 1008 | 1128 | 1008 | 840 |
| Color difference (hr) | 480 | 624 | 576 | 672 | 720 | 528 | 384 | 480 | 432 | 384 |

**Table 4**

| | Comparative Examples | | | | | | | | | | | |
|---|---|---|---|---|---|---|---|---|---|---|---|---|
| | 13 | 14 | 15 | 16 | 17 | 18 | 19 | 20 | 21 | 22 | 23 | 24 |
| Polypropylene resin composition | 60 | 60 | 60 | 60 | 60 | 60 | 60 | 60 | 60 | 60 | 60 | 60 |
| Comparative additive composition 1 | 40 | | | | | | | | | | | |
| Comparative additive composition 2 | | 40 | | | | | | | | | | |
| Comparative additive composition 3 | | | 40 | | | | | | | | | |
| Comparative additive composition 4 | | | | 40 | | | | | | | | |
| Comparative additive composition 5 | | | | | 40 | | | | | | | |
| Comparative additive composition 6 | | | | | | 40 | | | | | | |
| Comparative additive composition 7 | | | | | | | 40 | | | | | |
| Comparative additive composition 8 | | | | | | | | 40 | | | | |
| Comparative additive composition 9 | | | | | | | | | 40 | | | |
| Comparative additive composition 10 | | | | | | | | | | 40 | | |
| Comparative additive composition 11 | | | | | | | | | | | 40 | |
| Comparative additive composition 12 | | | | | | | | | | | | 40 |
| Flammability test (UL-94V) | V-0 | V-0 | V-0 | V-0 | V-0 | V-0 | V-0 | V-0 | V-0 | V-0 | V-0 | V-0 |
| Cracks (hr) | 96 | 144 | 168 | 120 | 336 | 384 | 312 | 432 | 504 | 576 | 480 | 600 |
| Color difference (hr) | 48 | 48 | 48 | 48 | 240 | 288 | 240 | 288 | 384 | 432 | 384 | 384 |

As is clear from Tables 3 and 4, the flame-retardant polypropylene resin compositions of the examples had excellent thermal resistance and flame retardancy. By contrast, the flame-retardant polypropylene resin compositions of the comparative examples had poorer thermal resistance than the flame-retardant polypropylene resin compositions of the examples. It can be seen from these results that the additive composition of the present invention can impart excellent thermal resistance to a synthetic resin, in addition to flame retardancy.

## Claims

1. An additive composition comprising components (A), (B), (C), and (D) below:
the component (A): a bromine-based flame retardant;
the component (B): an antimony oxide;
the component (C): a compound expressed by the formula (1) below; and
the component (D): a phenolic antioxidant, 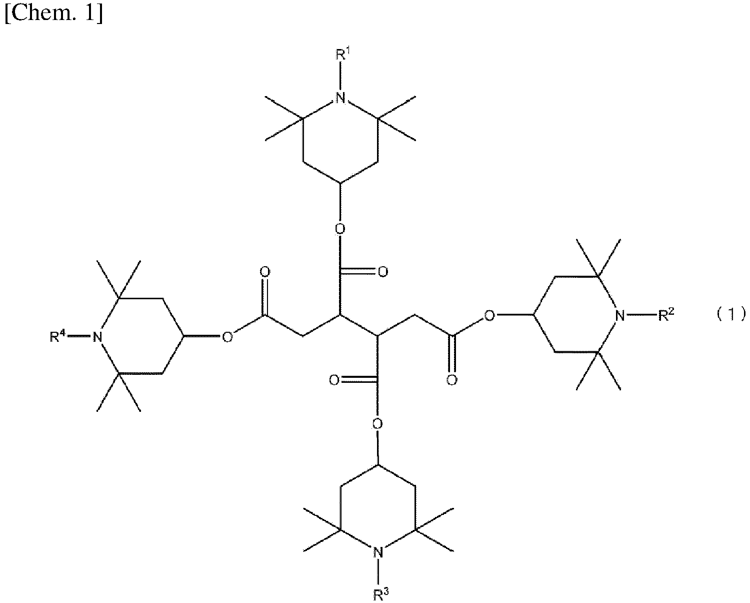
where R¹, R², R³, and R⁴ each independently represent a hydrogen atom or a monovalent hydrocarbon group having 1 to 4 carbon atoms.

2. The additive composition according to claim 1, wherein the component (A) is a bis(pentabromophenyl)alkane.

3. The additive composition according to claim 1 or 2, wherein R¹, R², R³, and R⁴ in the formula (1) each independently represent a hydrogen atom or a linear alkyl group having 1 to 4 carbon atoms.

4. The additive composition according to any one of claims 1 to 3, wherein a content ratio by mass of the component (A) to the component (C) is (A):(C) = 99.95:0.05 to 85:15.

5. The additive composition according to any one of claims 1 to 4, wherein the component (D) is a compound expressed by the formula (2) below or a compound expressed by the formula (3) below: 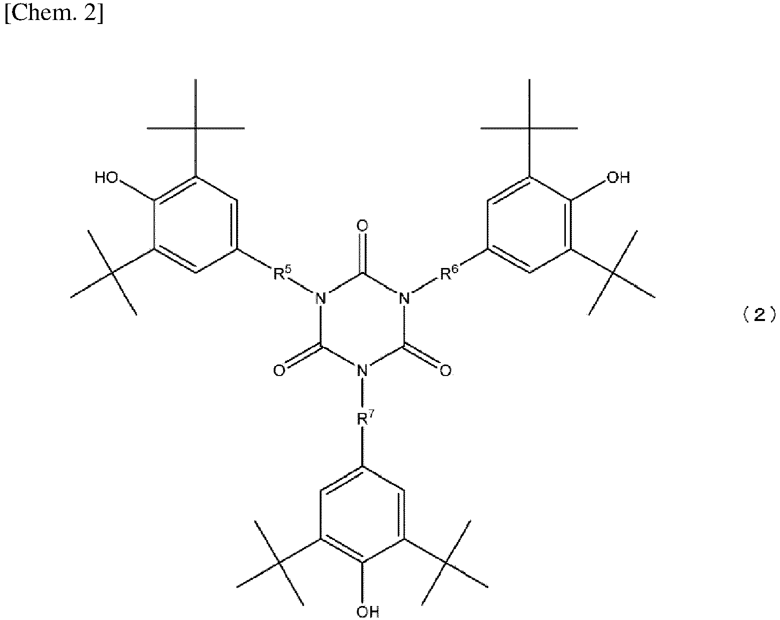 where R⁵, R⁶, and R⁷ each independently represent a divalent hydrocarbon group having 1 to 3 carbon atoms, and 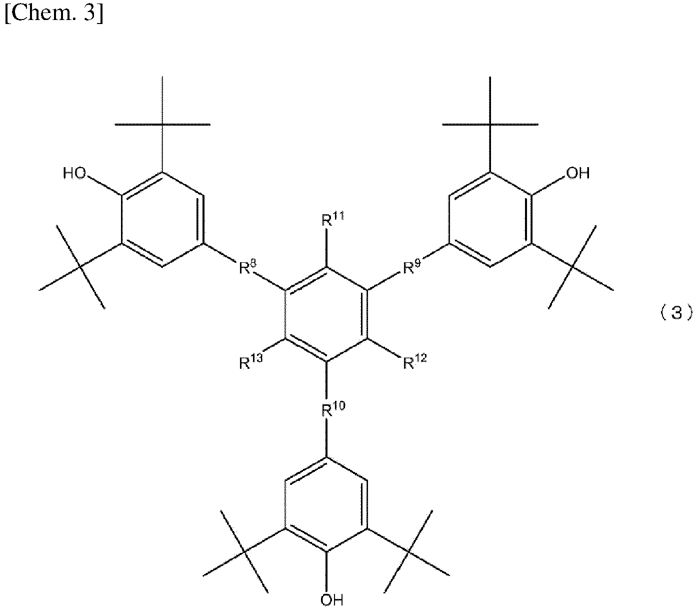
where R⁸, R⁹, and R¹⁰ each independently represent a divalent hydrocarbon group having 1 to 3 carbon atoms, and
R¹¹, R¹², and R¹³ each independently represent a hydrogen atom or a monovalent hydrocarbon group having 1 to 4 carbon atoms.

6. The additive composition according to claim 5, comprising:
a compound expressed by the formula (2),
wherein R⁵, R⁶, and R⁷ in the formula (2) each independently represent a linear alkylene group having 1 to 3 carbon atoms.

7. The additive composition according to claim 5 or 6, comprising:
a compound expressed by the formula (3),
wherein R⁸, R⁹, and R¹⁰ in the formula (3) each independently represent a linear alkylene group having 1 to 3 carbon atoms, and R¹¹, R¹², and R¹³ each independently represent a linear alkyl group having 1 to 4 carbon atoms.

8. The additive composition according to any one of claims 1 to 7, wherein a content ratio by mass of the component (A) to the component (D) is (A):(D) = 99.95:0.05 to 85:15.

9. The additive composition according to any one of claims 1 to 8, wherein a content ratio by mass of the component (A) to the component (B) is (A):(B) = 99:1 to 50:50.

10. A flame-retardant synthetic resin composition comprising a synthetic resin and the additive composition according to any one of claims 1 to 9.

11. The flame-retardant resin composition according to claim 10, wherein the synthetic resin is a polyolefin-based resin.

12. A formed product made of the flame-retardant synthetic resin composition according to claim 10 or 11.

13. A method for causing a synthetic resin to be flame-retardant, the method comprising:
adding an additive composition containing components (A), (B), (C), and (D) below to a synthetic resin:
the component (A): a bromine-based flame retardant;
the component (B): an antimony oxide;
the component (C): a compound expressed by the formula (1) below; and
the component (D): a phenolic antioxidant, 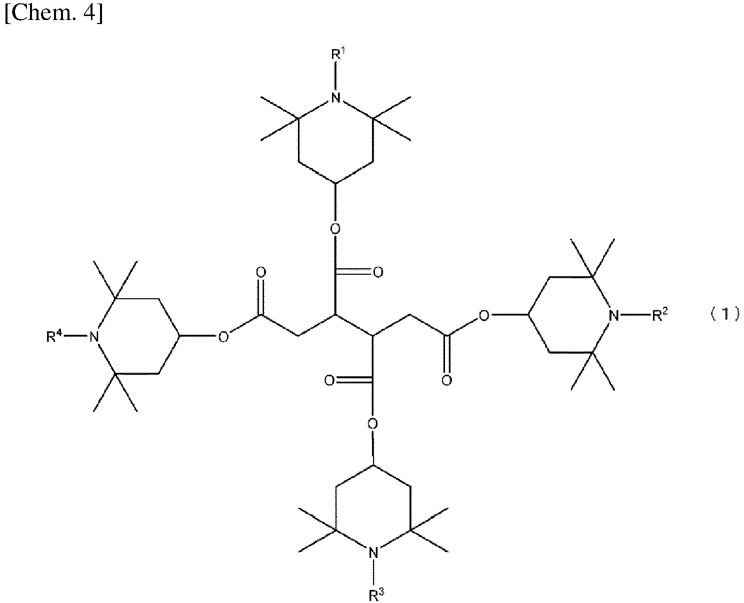
where R¹, R², R³, and R⁴ each independently represent a hydrogen atom or a monovalent hydrocarbon group having 1 to 4 carbon atoms.
